Europäisches Patentamt

European Patent Office

Office européen des brevets

(11) Numéro de publication: **0 225 264**
**A1**

(12) **DEMANDE DE BREVET EUROPEEN**

(21) Numéro de dépôt: **86420276.7**

(22) Date de dépôt: **13.11.86**

(51) Int. Cl.⁴: **C 04 B 20/10**
C 04 B 28/26, C 03 C 25/02
//(C04B28/26,14:46,22:10)

(30) Priorité: **14.11.85 FR 8517263**

(43) Date de publication de la demande:
**10.06.87 Bulletin 87/24**

(84) Etats contractants désignés:
**AT BE CH DE ES FR GB GR IT LI LU NL SE**

(71) Demandeur: **Gonnet, André**
**Montée de la Ladrière**
**F-38950 Saint Alban de Roche (FR)**

**Gonnet, Rémy**
**Vie du Vieux Chêne**
**F-38300 Meyrie (FR)**

(72) Inventeur: **Gonnet, Rémy**
**Vie du Vieux Chêne**
**F-38300 Meyrie (FR)**

**Egli, Walter J.**
**Habshagstrasse 18**
**CH-4153 Reinach BL (CH)**

(74) Mandataire: **Maureau, Philippe et al**
**Cabinet Germain & Maureau Le Britannia - Tour C 20, bld**
**Eugène Déruelle**
**F-69003 Lyon (FR)**

(54) **Procédé d'imprégnation dans la masse de produits hydrophobes par l'un des composants d'un revêtement durcissable.**

㊗ Ce procédé est caractérisé en ce que ledit composant (3) est appliqué sous forme de solution sur ledit produit, au cours de sa fabrication et alors qu'il présente une certaine hydrophilité.

Selon l'invention, le produit est choisi parmi les produits isolants et notamment les fibres minérales telles que la laine de roche (2) et ces fibres sont imprégnées directement à leur sortie de la tête de filage par pulvérisation d'une solution (3) de l'un des composants du revêtement durcissable servant à sa liaison et à sa solidarisation sur le support destiné à les recevoir.

FIG.2

**Description**

## PROCEDE D'IMPREGNATION DANS LA MASSE DE PRODUITS HYDROPHOBES PAR L'UN DES COMPOSANTS D'UN REVETEMENT DURCISSABLE.

La présente invention concerne un procédé d'imprégnation dans la masse de produits hydrophobes par l'un des composants d'un revêtement durcissable.

Elle sera plus spécialement décrite dans ce qui suit en référence à un procédé d'isolation par projection de fibres minérales telles que la laine de roche sans qu'il en résulte une limitation à sa portée.

Les propriétés isolantes des fibres minérales telles que la laine de roche sont connues depuis de nombreuses années.

Le processus classique de fabrication des fibres de laine de roche consiste à porter la roche à une température élevée dans un cubilot puis à diriger immédiatement le jet liquide de roche fondue vers une tête de filage où il est projeté sur des disques tournant à grande vitesse et immédiatement transformé en fibres très fines qui sont entraînées par un flux d'air dans un collecteur, où elles sont refroidies puis entraînées, toujours par aspiration dans un cylindre centrifugeur, appelé dégrenailleur, où s'effectue la séparation des parties non fibreuses, les parties fibreuses s'amalgamant entre elles et étant récupérées à la sortie et conditionnées en sacs ou en balles.

Sur chantier, ces fibres sont, en une seconde étape, soumises à un processus de cardage et d'aération, puis amenées toujours par voie pneumatique dans un dispositif de projection, en même temps que le produit destiné à la mise en place de la couche isolante.

L'importance croissante du marché a poussé les transformateurs à créer des mélanges de fibres de roche et de liants hydrauliques. Ce mélange s'effectue dans des mélangeurs et nécessite donc une deuxième intervention intercalée entre la fabrication de la fibre proprement dite et sa mise en place sur chantier. Dans cette phase de transformation sont rajoutés aux liants hydrauliques des huiles antipoussières et divers agents de traitement secondaires.

Il suffit ensuite, lors de l'étape de projection, de pulvériser de l'eau sur les fibres projetées pour assurer la prise du liant hydraulique.

Ce procédé de revêtement par projection convient bien pour de faibles épaisseurs isolantes, de l'ordre de quelques centimètres ; mais il ne peut être adapté à l'obtention d'épaisseurs supérieures à 60 mm, en raison notamment de la prise peu rapide du liant hydraulique. Il est alors nécessaire, pour arriver à des épaisseurs supérieures, d'intercaler un treillis métallique fixé mécaniquement au support entre ce dernier et la couche projetée avec les conséquences prévisibles d'augmentation du poids et d'accroissement du prix de revient. Ce procédé est, de plus, peu pratique à appliquer sur chantier.

Par ailleurs, le fait de mélanger le liant hydraulique aux fibres casse ces dernières, ce qui augmente leur densité appliquée. Le choix de ces liants constitue aussi un facteur très sensible d'augmentation de cette densité et de diminution de la valeur isolante propre à la fibre.

En raison de la demande d'épaisseurs importantes qui existe actuellement sur le marché, les règles professionnelles d'application ont autorisé des épaisseurs totales projetées de 100 mm ; ceci nécessite au minimum trois passages avec séchage de la couche précédente avant d'appliquer la nouvelle. Ces épaisseurs de 100 mm ne sont aujourd'hui que très peu mises en place, vu le coût élevé du produit (densité), et de la main-d'oeuvre (contraintes d'application).

De plus, certains cahiers des charges imposent de rajouter à l'eau de mouillage durant l'application de fortes proportions de colles synthétiques, ce qui pénalise très fortement le prix de revient.

Selon un autre procédé, des transformateurs introduisent au cours d'une opération supplémentaire de mélangeage une certaine quantité de poudre de carbonate de soude dans les fibres ; les fibres ainsi prétraitées sont mises en sacs, dirigées sur chantier et introduites dans le bac de la machine à projeter puis appliquées par projection en même temps qu'une solution de silicate alcalin, et plus spécialement du silicate de soude.

La réaction chimique qui se produit entre le silicate et le carbonate contenu dans les fibres assure une prise immédiate des fibres projetées et il est ainsi possible d'arriver à des épaisseurs pouvant atteindre 150 mm.

Ce procédé présente pourtant certains inconvénients. Il nécessite tout d'abord une opération supplémentaire et donc onéreuse de mélange des fibres de roche avec le durcisseur en poudre. Cette opération de mélange doit être effectuée très soigneusement, afin d'assurer une répartition uniforme du carbonate dans les fibres, condition indispensable à une prise régulière lors de la projection en présence de la solution de silicate. Elle présente les mêmes contraintes que celles rencontrées lors de la fabrication des mélanges avec liants hydrauliques.

De plus, ce mélange de poudre de carbonate et de fibres est dans la majeure partie des cas reconditionné en sacs, qui sont manutentionnés plusieurs fois avant d'être reversés manuellement dans la machine à projection. Tout ceci favorise la séparation des deux composants, ce qui pénalise l'homogénéité de la couche appliquée et entraîne obligatoirement des variations dans les qualités recherchées du produit isolant et dans ses vitesses de réaction chimique avec la solution liquide de silicate (temps de prise).

On a, par ailleurs, proposé (EP-A-0 011249) d'imprégner des fibres hydrophobes, à la sortie de la tête de filage avec une poussière de ciment, hydraté ou non hydraté, et avec une fine poussière de silicate de calcium.

Ce procédé ne saurait permettre une imprégnation dans la masse des fibres hydrophobes et l'on retrouve les mêmes contraintes que celles mentionnées ci-avant.

Le choix du silicate utilisé comme liant pose également certains problèmes notamment de toxicité et de corrosion en raison de son caractère très fortement alcalin ; il faut, par ailleurs, noter qu'il est parfois difficile de régler de façon certaine la viscosité des solutions de ce silicate de soude, ce qui peut poser des problèmes à la projection.

La présente invention s'est donné pour but de proposer un nouveau procédé d'imprégnation dans la masse de produits hydrophobes par l'un des composants d'un revêtement durcissable qui pallie ces inconvénients.

L'inventeur a, en effet, déterminé de façon surprenante qu'il était possible d'assurer une imprégnation dans la masse d'un produit hydrophobe avec l'un des composants d'un revêtement durcissable si l'on appliquait cedit composant sous forme de solution à un stade de fabrication du produit où ce dernier présente une certaine hydrophilité.

Selon un mode de réalisation préféré de l'invention, le produit est choisi parmi les produits isolants et notamment les fibres minérales telles que la laine de roche et ces fibres sont imprégnées directement à leur sortie de la tête de filage par pulvérisation d'une solution de l'un des composants du revêtement durcissable servant à sa liaison et à sa solidarisation sur le support destiné à les recevoir ; on obtient ainsi une imprégnation des fibres dans la masse en raison de la relative hydrophilité qu'elles présentent avant leur refroidissement complet.

Ledit composant est un durcisseur susceptible d'assurer la prise d'un liant appliqué ultérieurement.

Selon un autre mode de réalisation, ledit composant est un liant dont la prise sera ultérieurement assurée grâce à un durcisseur.

Il est donc possible de disposer, directement à la sortie de l'usine de fabrication, de fibres imprégnées de l'un des composants susceptible d'assurer la prise de l'autre composant appliqué lors de l'opération ultérieure d'application. On évite donc l'opération longue et coûteuse du mélange des fibres de roche cardées et du carbonate du procédé ci-avant.

Selon l'invention, le durcisseur est, de préférence, un bicarbonate alcalin.

D'autre part, et selon un mode de réalisation particulier de l'invention, le silicate utilisé comme liant est choisi parmi les silicates doubles de potassium et de lithium et les mélanges de silicate de potassium et de silicate de lithium tels que ceux décrits dans le FR-A-76 34630.

Ces silicates présentent des avantages importants par rapport aux silicates de soude proposés dans la technique antérieure. En effet, ils sont moins corrosifs et moins toxiques que ces derniers, en raison de l'alcalinité relativement faible de leur solution (pH entre 10,5 et 11) ; ces solutions ne présentent pas de variations de viscosité aussi importantes ; enfin, et cet avantage est extrêmement important dans le domaine des revêtements isolants, ils constituent, une fois précipités par le bicarbonate inclus dans les fibres de roche, des liants spécialement insensibles à l'eau et à l'humidité.

Le temps de prise et de réaction est bien contrôlé en raison de l'homogénéité du mélange par imprégnation selon l'invention et de la qualité des liants ; ce temps de prise est adapté pour permettre de faire adhérer de fortes épaisseurs sur les supports tout en permettant à l'applicateur sur chantier d'avoir le temps matériel de nettoyer les retombées sans difficultés, avant la précipitation irréversible du durcisseur et du liant. Cela se traduit par une économie très sensible de main-d'oeuvre sur chantier.

La présente invention sera bien comprise d'ailleurs et ses avantages ressortiront bien de la description qui suit d'un mode de réalisation d'un procédé d'isolation par projection de fibres de laine de roche en référence au dessin schématique annexé dans lequel :

Figure 1 est un diagramme schématique du processus classique de fabrication des fibres de laine de roche ;

Figure 2 est une vue similaire à figure 1, modifiée selon l'invention ;

Figure 3 représente, de façon schématique, l'étape de mélange propre à un procédé de la technique antérieure ;

Figure 4 est un diagramme schématique de l'étape d'application par projection des fibres de roche.

Sur les figures, les fibres de roche sont désignées de façon générale par 2, le durcisseur par 3, le mélange fibres-durcisseur par 4, et le liant de projection par 5.

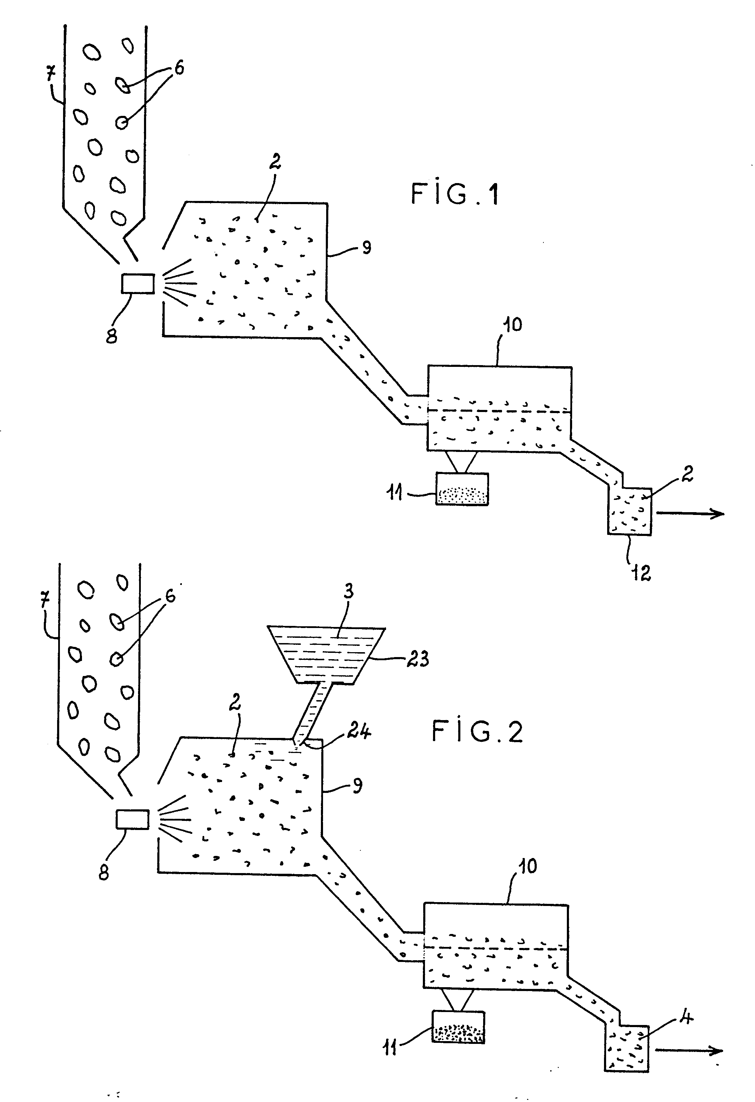

Le diagramme schématique représenté aux figures 1 et 2 décrit le processus de fabrication des fibres de roche.

Les roches 6 sont tout d'abord fondues à une température d'environ 1500°C dans le cubilot 7.

La masse en fusion passe immédiatement dans la tête de filage 8, où le jet incandescent est projeté sur des disques tournant à grande vitesse (non représentés) qui transforment instantanément ledit jet en fibres 2 de quelques microns. Un flux d'air entraîne ces fibres dans le collecteur 9.

Dans le processus classique de fabrication, les fibres 2 sont ensuite conduites dans un cylindre dégrenailleur 10 qui, par centrifugation élimine les parties non fibreuses qui sont rassemblées en 11, alors que les fibres 2, plus ou moins assemblées physiquement, sont réunies en 12 puis mises en sacs ou en balles pour être livrées au chantier où s'effectuera la projection, ou au transformateur pour fabrication de mélange.

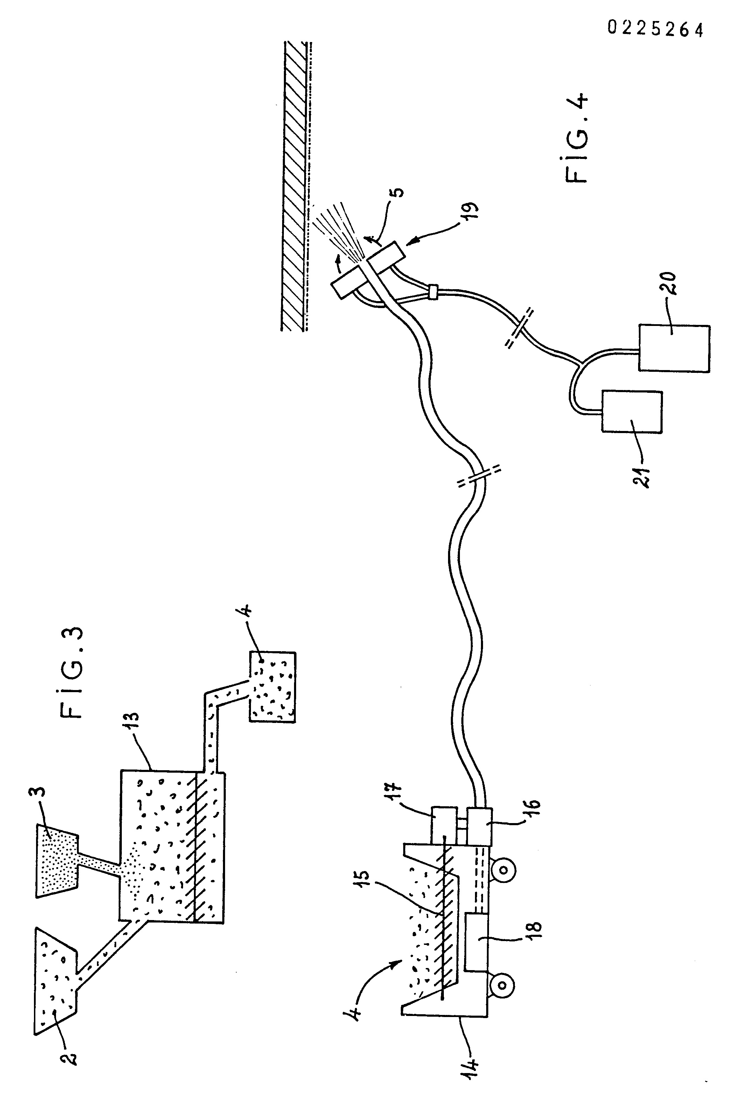

Cette étape de mélange schématiquement représentée à la figure 3 consiste à introduire dans les fibres le produit durcisseur, en l'espèce un carbonate alcalin pulvérulent.

Les fibres 2 provenant d'un stock de fibres venant de l'usine de fabrication, sont donc introduites dans un mélangeur 13 équipé de pâles ; on introduit également dans le mélangeur 13 le durcisseur 3. L'opération de mélange est relativement longue car il est indispensable pour la bonne suite des opérations, qu'il soit aussi homogène que possible, ce qui n'est pas évident avec des fibres aussi hydrophobes que les fibres de roche. On retrouve ici aussi les inconvénients déjà cités de séparation et de cassage des fibres.

Enfin, dans le procédé de la technique antérieure, le mélange 4 des fibres et de durcisseur est livré en sac sur le chantier de projection, où la projection s'effectuera selon le schéma explicité à la figure 4 et qui sera décrit par la suite.

Le procédé selon l'invention élimine l'opération supplémentaire de mélange représentée à la figure 3.

C'est ainsi que, selon l'invention et comme représenté à la figure 2, le durcisseur 3 est introduit directement dans le collecteur 9 par le poste 23 équipé de buses d'atomisation 24.

Le durcisseur 3 est, selon l'invention, constitué d'une solution aqueuse à environ 20 % d'un bicarbonate alcalin additionné d'une petite quantité de produit mouillant ; la concentration de cette solution peut être modifiée si le besoin s'en fait sentir pour des applications précises sans pour autant sortir du cadre de l'invention. Le pH de la solution est d'environ 9.

On a pu déterminer que l'introduction par atomisation de cette solution de bicarbonate sur les fibres sortant de la tête de filage permettait une pénétration dans la masse dudit bicarbonate dans les fibres en raison probablement d'une certaine hydrophilité que présentent les fibres de roche à l'état encore chaud, et ceci sans qu'il soit nécessaire de modifier l'installation existante, qui est toujours équipée de ce poste 13 d'introduction de produit indispensable quand ladite installation est utilisée pour la fabrication de panneaux de fibres agglomérées par des résines.

Les opérations supplémentaires et coûteuses de mélange de la technique antérieure sont ainsi supprimées.

Le mélange fibres-bicarbonate 4, directement prêt à l'utilisation et présentant une parfaite homogénéité sans risque de séparation du durcisseur, est livré en sacs ou balles sur le chantier de projection, où cette opération sera effectuée de façon classique à l'aide de la machine à projeter désignée de façon générale par 14, comme expliqué ci-après en référence à la figure 4.

Les fibres imprégnées de durcisseur 4 sont alimentées dans la machine 14 équipée d'une vis sans fin 15 qui conduit le mélange 4 dans la boîte à cardes 17 puis à l'écluse de distribution 16 ; un surpresseur d'air 18 assure la propulsion des fibres 4 cardées vers la tête de projection 19 ; simultanément, le liant 5 provenant du réservoir 20 est alimenté à la tête 19 par l'intermédiaire de la pompe 21.

Le liant 5 selon l'invention est de préférence une solution aqueuse de silicate double de potassium et de lithium ou encore un mélange de silicate de potassium et de lithium tels que les produits décrits dans le brevet FR-A-76 34630.

La faible alcalinité de ces produits évite les problèmes posés par les autres silicates alcalins : toxicité, corrosion. De plus, ces produits sont beaucoup moins sensibles aux variations de viscosité avec la température et posent, de ce fait, moins de problèmes lors de la projection.

On obtient une prise irréversible dans un temps contrôlé et l'on peut, en une seule passe, en utilisant le mélange fibres-durcisseur 4 selon l'invention obtenir des épaisseurs atteignant 200 mm.

On obtient des résultats similaires si l'on remplace dans l'étape de fabrication représentée à la figure 2, le durcisseur 3 par le liant 5 et si l'on introduit la solution de durcisseur 3 dans la tête de projection, aux lieu et place du liant 5.

Les revêtements obtenus présentent des performances remarquables tant au point de vue adhérence et cohésion sur le support qu'isolation thermique et incombustibilité. Ils sont, de plus, insensibles à l'eau et à l'humidité, d'où la très grande stabilité du coefficient d'isolation λ du produit.

Le procédé, comparativement aux techniques actuellement sur le marché, permet des économies très sensibles tant au point de vue de la main-d'oeuvre que du produit lui-même, dont on réduit la consommation. Son champ d'application est très étendu.

Comme il va de soi, et comme il ressort de ce qui précède, la présente invention ne se limite pas au seul mode de réalisation décrit ci-dessus à titre d'exemple non limitatif. Le procédé selon l'invention s'applique à tout revêtement qui nécessite une application en deux étapes pour être lié et éventuellement solidarisé au support destiné à le recevoir. Il est plus spécialement adapté à l'application de tout produit isolant présentant une certaine hydrophilité à une étape de sa fabrication, et notamment à tout type de fibres minérales autres que les fibres de laine de roche.

**Revendications**

1- Procédé d'imprégnation dans la masse de produits hydrophobes par l'un des composants d'un revêtement durcissable, caractérisé en ce que ledit composant est appliqué, sous forme de solution, sur ledit produit au cours de sa fabrication et alors qu'il présente une certaine hydrophilité.

2- Procédé selon la revendication 1, caractérisé en ce que le produit est choisi parmi les produits isolants et notamment les fibres minérales telles que la laine de roche (2) et en ce que ces fibres sont imprégnées directement à leur sortie de la tête de filage par pulvérisation d'une solution (3) de l'un des composants du revêtement durcissable servant à la liaison et à sa solidarisation sur le support destiné à les recevoir.

3- Procédé selon la revendication 1 et la revendication 2, caractérisé en ce que ledit composant (3) est un durcisseur susceptible d'assurer la prise d'un liant appliqué ultérieurement.

4- Procédé selon la revendication 1 et la revendication 2, caractérisé en ce que ledit composant (3) est un liant dont la prise sera ultérieurement assuré e grâce à un durcisseur.

5- Procédé selon l'une quelconque des revendications 1 à 4, caractérisé en ce que le composant (3) est appliqué sur ledit produit par atomisation ou pulvérisation.

6- Procédé selon l'une quelconque des revendications 1 à 5, caractérisé en ce que le durcisseur est un bicarbonate alcalin.

7- Procédé selon la revendication 6, caractérisé en ce que le durcisseur est une solution aqueuse contenant 10 à 30 % de bicarbonate alcalin.

8- Procédé selon l'une quelconque des revendications 1 à 7, caractérisé en ce que le liant est choisi parmi les mélanges de silicate de potassium et de lithium et les silicates doubles de potassium et de lithium.

0225264

FİG.1

FİG.2

FIG.3

FIG.4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| D,Y | EP-A-0 011 249 (WERHAHN & NAUEN) * Revendications 9,10 * | 1,2,4, 5 | C 04 B 20/10 C 04 B 28/26 C 03 C 25/02 // (C 04 B 28/26 C 04 B 14:46 C 04 B 22:10 ) |
| | --- | | |
| Y | DE-B-1 253 133 (HOLZWERKE H. WILHELMI) * Revendication 1; colonne 2, lignes 29-34 * | 1,2,4, 5 | |
| | --- | | |
| A | EP-A-0 044 716 (M.H. DETRICK CO.) * Résumé * | 1,2 | |
| | --- | | |
| A | FR-A-2 559 146 (SOC. FR. HOECHST) * Revendication 1 * | 6,7 | |
| | --- | | DOMAINES TECHNIQUES RECHERCHES (Int. Cl.4) |
| D,A | FR-A-2 332 311 (VAN BAERLE & CO.) * Revendication 1 * | 8 | C 04 B 20/00 C 04 B 41/00 C 04 B 28/00 C 03 C 25/00 |
| | --- | | |
| A | GB-A- 363 151 (S.A. POUR LE TRAITEMENT DES MINERAIS ALUMINO-POTASSIQUES) | | |
| | ----- | | |

Le présent rapport de recherche a été établi pour toutes les revendications

| Lieu de la recherche | Date d'achèvement de la recherche | Examinateur |
|---|---|---|
| LA HAYE | 16-02-1987 | DAELEMAN P.C.A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82